# FASCICULE DE BREVET EUROPEEN

(11) **EP 2 298 599 B1**
(45) Date de publication et mention de la délivrance du brevet: **07.08.2019**
(21) Numéro de dépôt: 10174582.6
(22) Date de dépôt: 31.08.2010
(51) Int. Cl.: B60Q 1/00, B60Q 1/076

(54) **Module optique pour projecteur de véhicule automobile équipé d'un organe de raccordement électrique avec des organes distants**
Optisches Modul für Kraftfahrzeug-Scheinwerfer, das mit einem elektrischen Anschlussorgan zur Verbindung mit entfernten Organen ausgestattet ist
Optical module for an automobile headlight with a coupling unit for an electrical connection with remote units

(30) Priorité: 04.09.2009 FR 0904222
(43) Date de publication de la demande: 23.03.2011
(73) Titulaire: VALEO VISION, 93012 Bobigny (FR)
(72) Inventeur: NICOLAI, Jean-Marc, 92400, COURBEVOIE (FR); TOUZET, Benjamin, 92200, NEUILLY SUR SEINE (FR); SADOUX, Grégoire, 92600, ASNIERES SUR SEINE (FR); BLANDIN, Jonathan, 93320, LES PAVILLONS SOUS BOIS (FR)

(56) Documents cités:
- WO-A1-00/51844
- DE-A1-102007 050 348
- US-A- 4 941 258
- US-B1- 7 304 239

## Description

L'invention est du domaine des dispositifs d'éclairage notamment pour véhicule automobile, et relève plus particulièrement des projecteurs équipant ces véhicules. Plus spécifiquement, l'invention porte sur les modalités de raccordement électrique entre un module optique équipant un projecteur automobile, et des organes distants qui sont indifféremment logés à l'intérieur et/ou à l'extérieur du projecteur.

Les projecteurs pour véhicules automobiles sont composés dans leur généralité d'un boîtier qui est fermé par une paroi transparente à travers laquelle émergent un ou plusieurs faisceaux lumineux. Ce boîtier loge un ou plusieurs modules optiques qui sont montés à l'intérieur du boîtier par l'intermédiaire d'un support agencé en châssis, en platine ou en tout autre organe intermédiaire analogue qui est apte à supporter le ou les modules optiques et qui est organisé pour leur montage à l'intérieur du boîtier. Un tel support est susceptible d'être un support individuel affecté à un module optique, ou un support collectif recevant plusieurs de ces supports individuels. Les modules optiques comprennent chacun un générateur de lumière comprenant au moins une source lumineuse associée à un système optique. La source lumineuse est un quelconque organe apte à émettre de la lumière, tel qu'une lampe à filament, une lampe à décharge ou encore un organe associant une ou plusieurs diodes électroluminescentes (DEL) qui sont avantageusement regroupées sur un support électronique commun. Le système optique est apte à modifier au moins un paramètre de la lumière générée par la source lumineuse pour l'émission du faisceau lumineux par le module optique. Le système optique comprend des composants optiques tel qu'un réflecteur, une lentille, un élément diffusant, un collimateur, ou tout autre organe apte à modifier au moins l'un des paramètres de la lumière générée par la source lumineuse, tel que sa réflexion moyenne et/ou sa direction, ou encore une combinaison de plusieurs de ces éléments. Le module optique est équipé de divers organes nécessaires à son fonctionnement, tels que des moyens d'activation de la ou des sources lumineuses qu'il comporte, des moyens de refroidissement, et une ossature porteuse de l'ensemble des composants du module optique. Cette ossature est exploitée pour le montage du module optique à l'intérieur du boîtier par l'intermédiaire du support au moins.

Parmi les modules optiques destinés à équiper les projecteurs pour véhicules automobiles, certains sont susceptibles d'être montés mobiles sur le boîtier. Par exemple, le module optique mobile est utilisé pour une fonction d'éclairage dans les virages ou DBL (Dynamic Bending Light en anglais), selon laquelle le module optique est monté mobile sur le boîtier en débattement latéral par rapport à l'axe général de progression du véhicule, encore appelé axe longitudinal du véhicule. Ces fonctions DBL peuvent être appliquées à des fonctions code, alors appelées code virage ou code DBL, ou à des fonctions route, encore appelé route DBL. Par exemple encore, une autre fonction connue réside dans une correction dynamique d'assiette du module optique à partir d'un montage en mobilité du module optique sur le boîtier par rapport au plan de repos du véhicule au sol. D'autres fonctions complexes sont encore connues, selon lesquelles divers modules optiques sont montés mobiles sur le boîtier et coopèrent entre eux pour l'obtention d'un éclairage sélectif de la voie de circulation, notamment afin d'éviter une gêne pour les usagers d'autres véhicules suivis ou croisés.

Le ou les modules optiques sont montés mobiles sur le boîtier par l'intermédiaire du ou des supports qui leur sont affectés. D'une manière générale, il est à considérer qu'un module optique mobile est susceptible d'être monté mobile en pivotement sur le boîtier autour d'au moins un axe correspondant à l'une des directions de l'espace Euclidien. Le montage en mobilité du module optique est susceptible d'être réalisé selon diverses et quelconques formes de réalisation, mais induit nécessairement la mobilité à d'autres organes qui sont montés mobiles conjointement au module optique. Notamment, de tels organes sont des organes électriques individuellement embarqués sur un ou plusieurs modules optiques, tels que la ou les sources lumineuses et leurs moyens d'activation, des capteurs et/ou un ou plusieurs moteurs électriques.

Se pose le problème du raccordement électrique entre les organes embarqués sur le module optique et/ou montés conjointement mobiles avec celui-ci, avec d'autres organes qui sont placés à distance du module optique. Par exemple, les moyens de commande de la mise en oeuvre du module optique sont habituellement implantés à distance de celui-ci, dans un espace disponible du boîtier voire à l'extérieur du projecteur. Par ailleurs, la source d'alimentation en énergie du module optique est couramment une source distante équipant le véhicule.

Couramment, ce raccordement électrique entre les dits organes embarqués et/ou mobiles et les dits organes distants est réalisé par l'intermédiaire de conducteurs d'au moins un flux électrique. Ces flux électriques correspondent notamment à un flux d'alimentation en énergie, à un signal de commande ou à tout autre signal d'information susceptible d'être échangé entre le module optique et des organes électriques distants. De tels conducteurs sont notamment formés de fils ou de câbles.

L'évolution des techniques rend complexe les modalités d'exploitation des modules optiques, pour leur conférer des aptitudes et des fonctions avantageusement nouvelles, le nombre de flux électrique nécessaire augmentant. Par exemple, les modalités d'activation de la ou des sources lumineuses sont de plus en plus perfectionnées, notamment à partir d'une activation sélective de DEL exploitées pour générer la lumière émise par le projecteur. Certains modules elliptiques comprennent également des caches mobiles pour modifier la forme du faisceau généré par le module, leur pilotage peut être plus ou moins complexe et de nombreux flux électriques doivent être amenés au module.

Selon une technique traditionnelle, les conducteurs sont rassemblés en au moins une gaine multicâbles. Cet assemblage est appelé câble rond dans la présente demande. Une telle gaine présente l'avantage d'être robuste, mais les inconvénients d'être rigide et de comprendre un nombre limité de câbles. La rigidité des câbles n'est pas favorable à une liberté de mouvement du module optique, et leur nombre limité restreint le nombre de conductions potentielles en flux électriques qu'ils acheminent.

Un module optique selon le préambule de la revendication 1 est connu de DE 10 2007 050 348.

Le but de la présente invention est de proposer une amélioration pour raccorder électriquement un module optique que comprend un projecteur de véhicule automobile, avec des organes distants de ce module optique. Il est notamment visé par la présente invention de proposer une telle solution qui prenne en compte les contraintes qui ont été exposées, en permettant d'optimiser les capacités de transmission d'ordres de commande pour la mise en oeuvre des différents organes électriques que comprend le module optique, et en offrant une pérennité du raccordement électrique proposé malgré d'éventuels déplacements fréquents et répétés du module optique à l'intérieur du boîtier dans le cadre d'un montage en mobilité du module optique à l'intérieur d'un boîtier du projecteur.

Un objet de l'invention est un module optique équipant un dispositif d'éclairage et/ou de signalisation pour véhicule automobile, comprenant les caractéristiques de la revendication 1.

L'invention permet ainsi de mettre en oeuvre des moyens de raccordement électrique comprenant une pluralité de conducteurs qui sont chacun affectés à l'acheminement d'un flux électrique, tout en diminuant la liberté de mouvement du raccordement électrique. Ainsi, malgré le fait que le raccordement soit entraîné en mouvement, celui-ci subit des mouvements moins aléatoires et moins de torsions, comparé à un câble rond. La durée de vie du raccordement électrique est ainsi augmentée. Ceci est particulièrement intéressant dans le cadre de module DBL, qui sont fréquemment sollicités en déplacement.

Un tel flux électrique correspond notamment à un flux d'alimentation en énergie, à un signal de commande ou à tout autre signal relatif à une information susceptible d'être échangée entre le module optique et des organes électriques et/ou électroniques distants. De tels organes distants sont notamment des moyens de commande du fonctionnement du module optique et/ou une source d'énergie électrique.

La structure de montage peut être une ossature, sur laquelle est fixé le réflecteur. Le réflecteur peut également être la pièce de montage lui-même. Dans ce dernier cas, le réflecteur dispose alors de moyens de fixation au support. Par exemple, le réflecteur peut comprendre des tenons s'enclenchant dans des orifices du support pour permettre la rotation du réflecteur par rapport au support.

Selon l'invention, l'élément flexible a une forme de type nappe. Par nappe, on entend un objet d'épaisseur faible au regard de sa largeur et de sa longueur, comportant deux faces principales sensiblement parallèles, la distance entre elles correspondant à l'épaisseur de la nappe. Les faces principales de la nappe, telle qu'on l'entend dans la présente demande correspondent chacune globalement à une surface (globalement au sens qu'elles peuvent néanmoins comprendre des aspérités moins grandes que l'épaisseur de la nappe, telles que des stries), celle-ci étant une surface développable et réglée et pouvant être par simple déformation mise sous forme de plan, sans allongement, ni déchirement. Autrement dit, cette surface aura la forme d'un plan à qui on a fait subir des transformations, sans allongement, ni déchirement.

Ainsi, l'élément flexible constitue un organe de guidage en mobilité des conducteurs électriques qu'il comprend par rapport à la déformation, tant en amplitude que suivant une direction autorisée de mobilité du module optique. L'élément flexible empêche une mobilité des conducteurs suivant certaines directions, à la différence d'une liaison par câble rond. Notamment, une telle rigidité interdit une déformation des conducteurs dans une quelconque direction. L'extension des conducteurs le long de l'élément flexible correspond notamment à leur extension parallèlement aux surfaces correspondant aux faces de l'élément flexible en accompagnant la conformation conférée à ces dernières.

La protection mécanique et le guidage en mobilité offerts par l'élément flexible permettent d'exploiter des conducteurs rassemblés en très grand nombre sur l'élément flexible, avec pour avantage d'optimiser le nombre de flux électriques aptes à être échangés entre le module optique et les organes distants. Même si les conducteurs sont fins, leur utilisation est fiable et pérenne y compris pour des mouvements fréquents, répétés et alternatifs du module optique, grâce à la protection mécanique offerte par l'élément flexible.

L'invention est ainsi particulièrement adaptée à des modules pour lesquels un grand nombre de flux électriques doivent être acheminés au module optique. Le module pourra ainsi être un module elliptique comprenant un moteur pas à pas pour provoquer la mobilité d'un cache comprenant différents bords de coupure. Ce moteur recevra les différentes commandes électriques de positionnement du cache et son alimentation. Un tel moteur pas à pas est réputé plus fiable et plus précis qu'un moteur à courant continu, et procure un réglage par palier de la mobilité du cache selon différentes positions. Il est également possible de fixer à ladite structure de montage un deuxième moteur, actionnant le mouvement de ladite structure de montage par rapport au support, de sorte que ce moteur est également entraîné en rotation. Le raccordement électrique selon la présente invention permettra également d'alimenter ce deuxième moteur et de lui envoyer les différents signaux de commandes. L'élément flexible pourra également comprendre des conducteurs alimentant la ou les sources lumineuses du module optique. Par exemple encore, les modalités d'activation de la ou des sources lumineuses pourront être perfectionnées, notamment à partir d'une activation sélective de diodes électroluminescentes (ou DEL) exploitées pour générer la lumière émise par le projecteur. L'élément flexible peut également contenir des conducteurs pour transmettre les signaux de capteurs solidaires en mouvement de ladite structure de montage. Les moyens de commande de la mise en oeuvre du module optique sont habituellement implantés à distance de celui-ci, dans un espace disponible du boîtier voire à l'extérieur du projecteur. Par ailleurs, la source d'alimentation en énergie du module optique est couramment une source distante équipant le véhicule. L'élément flexible permet donc le raccordement d'un module optique nécessitant de nombreux flux électriques, sans augmenter la rigidité du raccordement électrique et en limitant les possibilité de mouvement de celui-ci augmentant ainsi sa fiabilité.

Comme l'élément flexible a une forme de type nappe, celui-ci peut prendre différentes formes, par exemple une forme de ruban, de feuille ou d'autres formes.

On comprendra que selon certaines variantes, l'élément flexible peut comporter plusieurs zones successives de flexibilité autour d'axes de déformation respectifs. Ces axes de déformations sont indifféremment des axes parallèles et/ou des axes concourants, l'élément flexible étant susceptible de comporter des zones de renvoi qui localement protège mécaniquement les conducteurs de toute altération de l'une à l'autre des différentes zones de flexibilité de l'élément flexible correspondantes aux divers axes de déformation qui leur sont affectés.

L'élément flexible est fixé à la structure de montage du module optique, par exemple une ossature ou le réflecteur lui-même, et avec un support du module optique sur lequel la structure de montage est montée en mobilité. Le support est susceptible d'être solidaire du boîtier en étant exploité pour le montage individuel en mobilité du module optique et/ou d'être un support collectif porteur d'une pluralité de modules optiques montés individuellement mobiles ou fixes sur ce support collectif. Selon certaines variantes, le support est susceptible d'être lui-même monté mobile sur le boîtier. Dans certaines variantes, ce support forme un support général pour ladite pluralité de modules optiques en étant apte à être équipé d'un organe de raccordement électrique de l'invention qui est en outre en prise sur un organe fixe solidaire du boîtier.

Comme l'élément flexible a une forme de type nappe, on peut définir une surface médiane située à mi-chemin entre les deux faces de l'élément flexible, la plus courte distance entre ces faces correspondant à l'épaisseur de l'élément flexible.

Selon l'invention, l'élément flexible est muni de moyens de solidarisation mécanique respectivement affectés à sa fixation sur la structure de montage et sur au moins le support. Ces moyens de solidarisation pourront être adaptés pour augmenter la surface de fixation de l'élément flexible et restreindre ainsi davantage ses possibilités de mouvements. Par exemple, dans le cas d'un élément flexible en forme de nappe de type ruban, la fixation du bord à chaque extrémité de l'élément flexible, c'est-à-dire à ladite structure de montage d'un côté et au support de l'autre, permet de limiter la déformation de l'élément flexible : soit l'élément flexible est courbé d'un côté d'un plan passant par les deux bords extrêmes, soit il est courbé de l'autre côté.

Selon l'invention, l'élément flexible a une forme du type d'une nappe, et ces moyens de solidarisation mécanique permettent de maintenir ledit élément flexible courbé au moins en partie, de manière à ce que ladite surface médiane de l'élément flexible soit dans la partie courbée sensiblement parallèle à un axe de rotation de ladite structure de montage par rapport audit support. Dans ce cas, la déformation sera davantage limitée, augmentant ainsi davantage la fiabilité du raccordement électrique et sa durée de vie. Selon une variante améliorant encore davantage la fiabilité et la durée de vie du raccordement électrique, cet axe de rotation est sensiblement vertical lorsque l'axe optique du générateur de lumière est sensiblement horizontal.

Selon un autre mode de réalisation, il est également possible de réaliser un module dans lequel cet axe de rotation est sensiblement horizontal lorsque l'axe optique du générateur de lumière est sensiblement horizontal. Un tel mode de réalisation est utilisé par exemple dans le cadre d'un module bénéficiant d'une correction de portée dynamique, à savoir en fonction du relief de la route, de l'accélération et du freinage.

Selon une variante de réalisation, la structure de montage est mobile entre une première position extrême et une deuxième position extrême, et les élément de fixation sont agencés de telle sorte et ladite nappe présente une taille telle que ladite nappe est recourbée en arceau. Ceci permet d'imposer le mouvement de déformation de l'élément flexible.

L'élément flexible est encore avantageusement équipé de connecteurs qui sont électriquement reliés aux extrémités respectives des conducteurs et qui sont aptes à coopérer avec des connecteurs complémentaires respectivement affectés au module optique et à l'organe distant. De tels connecteurs complémentaires, et plus particulièrement celui affecté à l'organe distant, sont susceptibles d'équiper un dit tronçon fixe de la liaison filaire globale.

Selon une variante de réalisation, l'élément flexible est muni de platines qui constituent des organes d'intégration à l'élément flexible desdits moyens de solidarisation mécanique de l'élément flexible. Outre une plus grande simplicité de réalisation, la fixation est plane et améliore ainsi la résistance à l'usure.

Selon une variante de réalisation, ces platines sont orientées suivant des plans parallèles et localement à leur implantation sur l'élément flexible suivant des plans respectifs parallèles à la surface médiane de l'élément flexible. Ces platines sont notamment assemblées à l'élément flexible par des moyens d'assemblage, qui sont du type par scellement, par clipage, par encastrement, par emboîtement, et/ou par coopération entre des organes de fixation tel que par vissage.

Les platines constituent avantageusement des organes d'intégration à l'élément flexible des moyens de solidarisation et/ou des connecteurs. Notamment, de telles platines sont des organes robustes placées au moins aux extrémités de la zone flexible de l'élément flexible, sinon aux extrémités de l'élément flexible.

Plus particulièrement, au moins deux platines sont assemblées à l'élément flexible de part et d'autre de sa zone flexible. De telles platines constituent avantageusement des organes de renfort de l'élément flexible à l'encontre de sa déformation dans le plan structurel de la feuille.

Selon une variante de réalisation, l'élément flexible comporte un prolongement de sa zone flexible qui est muni à son extrémité libre d'une platine porteuse du connecteur affecté au module optique.

L'élément flexible comporte avantageusement des organes de protection mécanique des conducteurs, qui sont disposés de part et d'autre de la zone flexible de l'élément flexible. La protection des conducteurs est renforcée aux extrémités de la zone flexible de l'élément flexible, dans leurs zones les plus sollicitées en contrainte lors de leur mouvement induit par la mobilité du module optique. Selon une variante de réalisation, les platines comprennent un bord où l'élément flexible rejoint la platine correspondante, ce bord présentant une courbure pour éviter un contact entre un bord saillant et l'élément flexible lors du mouvement de ladite structure de montage. Pour rendre ce contact encore moins usant vis-à-vis de l'élément flexible, ce bord est préférentiellement cylindrique et est orienté dans la direction de rapprochement des extrémités de l'élément flexible.

Selon une variante de réalisation, l'élément flexible est une câble plat. Les conducteurs électriques sont rassemblés et enrobés d'un matériau synthétique, tel qu'un polymère, pour former une nappe flexible. Les conducteurs électriques sont préférentiellement des conducteurs de type laminés. Une telle nappe permet l'exploitation de nombreux conducteurs pour un encombrement tolérable et est apte à être utilisée pour obtenir un pilotage complexe d'organes à mettre en oeuvre.

Selon une autre variante de réalisation, l'élément flexible est un circuit imprimé souple. Les conducteurs sont des pistes conductrices avantageusement intégrées à l'élément flexible en étant ménagés par dépôt sur l'élément flexible d'un matériau conducteur, cuivre par exemple. Un tel dépôt de matériau conducteur est revêtu d'une pellicule d'un matériau isolant. Les conducteurs peuvent être en nombre important sans pour autant conférer à l'élément flexible un volume encombrant et/ou une masse susceptible de gêner la mobilité du module optique. Selon une variante de réalisation, les conducteurs sont intégrés à l'élément flexible en étant ménagés par dépôt électrolytique d'un matériau conducteur sur au moins une face de l'élément flexible. Selon une variante alternative préférentielle, les pistes conductrices de circuit imprimé souple sont réalisées par dépôt laminé d'un matériau conducteur sur au moins l'une de ses faces. Les pistes conductrices par dépôt laminé sont en effet plus robustes, et offrent une résistance pérenne notamment pour un mouvement en flexion-rotation autour de l'axe de déformation au moins.

Préférentiellement, lorsque l'élément flexible est un câble plat ou un circuit imprimé souple, l'élément flexible est recouvert d'une couche de matériau conducteur relié à la masse, de manière à limiter les émissions électromagnétique par le raccordement électrique. Il peut s'agir par exemple d'un film protecteur. Bien entendu cette couche de matériau conducteur est isolée électriquement des conducteurs électriques assurant la transmission des flux électriques, de commande ou d'alimentation, au module optique. Selon une variante de réalisation, lorsque l'élément flexible est un circuit imprimé souple, les faces du circuit imprimé souple sont recouvertes par une encre conductrice, pour assurer la protection au rayonnement magnétique. Selon une variante de réalisation, lorsque l'élément flexible est un câble plat, il peut être recouvert d'une couche métallique, comme une feuille de métal, suffisamment fine pour conserver la flexibilité de l'élément flexible.

Selon un exemple de réalisation, l'élément flexible comprend également des composants électroniques.

Selon un exemple de réalisation, l'élément flexible permet le raccordement électrique entre d'une part des composants électroniques, par exemple des DEL, et/ou des dispositifs électriques, tels que des moteurs, fixés à la structure de montage et d'autre part un module de commande fixé au dit support.

Selon un exemple de réalisation, le module optique selon la présente invention est un module destiné à réaliser une fonction DBL, le mouvement entre la structure de montage et ledit support étant destinée à conférer une fonction DBL au dit module optique. Le module optique est monté mobile en débattement latéral par rapport au support.

La présente invention concerne aussi un dispositif d'éclairage et/ou de signalisation pour véhicule automobile comprenant au moins un module optique tel qu'il vient d'être décrit.

Selon une variante de réalisation le dispositif d'éclairage et/ou de signalisation comprend un moyen de connexion complémentaire entre le support et des organes distants du module optique, le raccordement électrique entre la structure de montage et le support étant plus souple que le moyen de connexion complémentaire.

Un tel dispositif d'éclairage comprend notamment un boîtier logeant au moins un module optique indifféremment monté mobile ou fixe sur le boîtier. Le support du module optique est en outre indifféremment un support individuel et/ou un support collectif de soutien d'une pluralité de modules optiques. Un tel montage étagé des supports procure notamment une multiplication des possibilités de montage en mobilité d'un ou de plusieurs modules optique à l'intérieur du boîtier. L'organe de raccordement électrique est notamment interposé entre la structure de montage du module optique, et au moins le support intermédiaire entre le module optique et le boîtier du projecteur.

Des exemples de réalisation de la présente invention vont être décrits en relation avec les figures des planches annexées, dans lesquelles :
La fig.1 est une illustration en perspective arrière d'un module optique pour projecteur automobile équipé d'un organe de raccordement électrique selon un mode de réalisation de la présente invention.
La fig.2 est une représentation schématique de possibilités de mouvement en flexion d'un organe de raccordement électrique de la présente invention.
Les fig.3 à fig.5 sont des illustrations en perspective arrière du module optique représenté sur la fig.1, selon différentes positions respectives d'orientation latérale.
Les fig.6 à fig.8 sont des représentations schématiques d'un organe de raccordement électrique équipant le module optique illustré sur la fig.1, dans des positions correspondantes aux différentes positions de ce module optique représentées respectivement sur les fig.3 à fig.5.
Les fig.9 à fig.11 sont des illustrations analogues respectivement aux fig.3 à fig.5, épurées de la présence du module optique pour rendre mieux visible l'organe de raccordement électrique dont il est équipé.
Les fig.12 à fig.14 sont des illustrations en perspective qui illustrent successivement l'assemblage de divers composants d'un organe de raccordement électrique selon une forme de réalisation de la présente invention.

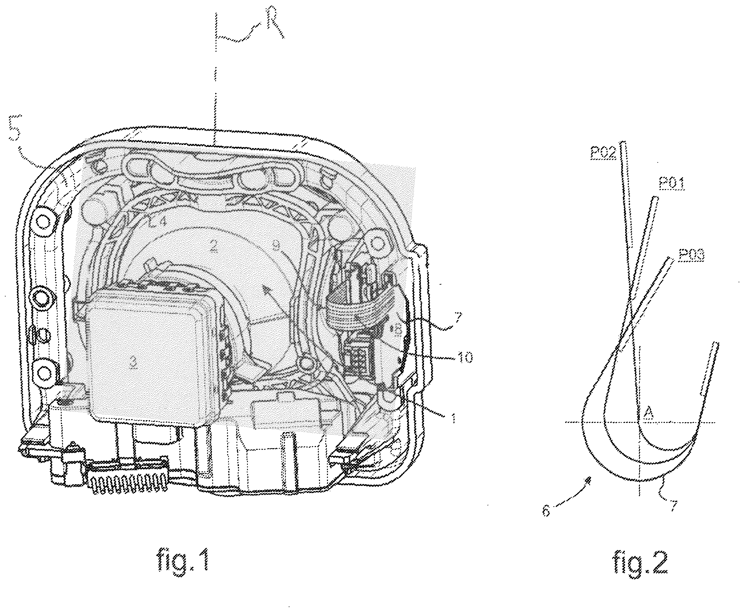

Sur les fig.1, un module optique 1 est destiné à équiper un dispositif d'éclairage d'un véhicule automobile, tel qu'un projecteur. Ce module optique 1 comprend un générateur de lumière comprenant un système optique 2 coopérant avec une source lumineuse. Dans l'exemple illustré, la source lumineuse est une lampe à décharge 3, mais d'autres sources lumineuses pourraient être appliquées à la présente invention, comme par exemple des DEL ou des lampes halogènes. Le module optique 1 est équipé de divers organes nécessaires à son fonctionnement, tels que des moyens d'activation de la ou des sources lumineuses qu'il comporte et une structure de montage 4 porteuse de l'ensemble des composants du module optique 1. Dans l'exemple illustré, cette structure de montage est une ossature sur laquelle est fixé le réflecteur du système optique 2. Cette ossature 4 est exploitée pour le montage du module optique 1 à l'intérieur d'un boîtier du projecteur, par l'intermédiaire d'un support 5. Sur l'exemple de réalisation illustré, ce support 5 porte individuellement en mobilité le module optique 1 par l'intermédiaire de l'ossature 4. Un organe de raccordement électrique est interposé entre le support 5 et le module optique 1. Cet organe de raccordement est destiné à relier électriquement le module optique 1 avec des organes distants de commande de son fonctionnement et/ou d'alimentation en énergie.

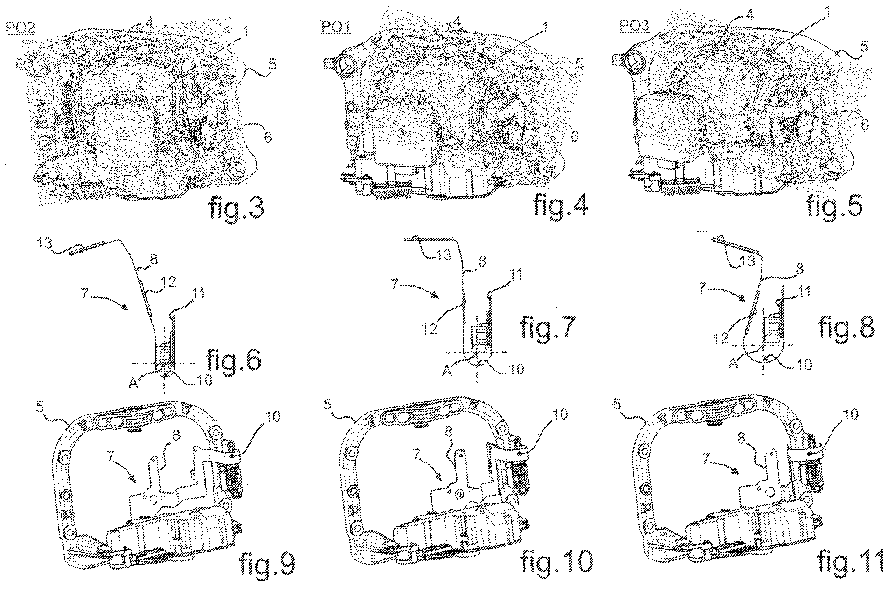

Les vues du module optique 1 représenté sur les fig.3 et fig.5 illustrent pour exemple une faculté de mobilité du module optique en débattement latéral, pour répondre à une fonction du projecteur dite DBL. Notamment sur la fig.4, le module optique 1 est représenté en position médiane PO1 de mouvement, tandis que sur les fig.3 et fig.5, le module optique 1 est représenté en débattement latéral respectivement vers la gauche PO2 et vers la droite PO3. Il est à noter que les figures 3 et 5 représentent une variante de réalisation différant légèrement de la variante illustrée en figure 1. La différence entre ces deux variantes est dans la forme du support 5. La fixation de l'ossature au support est cependant identique dans les deux variantes.

Sur la fig.2, l'organe de raccordement électrique 6 comprend un élément flexible 7 ayant une forme de type nappe ou feuille de faible épaisseur. Cette nappe admet donc une surface médiane parallèle aux deux faces de la nappe. Celle-ci pourrait être déroulée de manière à être plane. Une fois le raccordement électrique effectué, la nappe est courbée, la surface médiane restant une surface développée et réglée. Dans le mode de réalisation illustré en figure 2, la surface médiane reste sensiblement perpendiculaire au plan de la page d'illustration, c'est-à-dire parallèle à un axe A donné, cet axe A étant vertical lorsque l'axe optique du générateur de lumière est horizontal. L'élément flexible présente une zone d'inflexion lui conférant une conformation en arceau. L'élément flexible est ainsi déformable de manière à ce que la surface médiane soit sensiblement parallèle à cet axe A. Ainsi l'élément flexible ne subit une déformation que dans une seule dimension de l'espace. Ainsi malgré les mouvements répétés de débattement latéral, le raccordement électrique présentera une fiabilité et une résistance à l'usure bien meilleure qu'une simple liaison par gaine de fils électrique. La liaison de raccordement électrique est également très souple malgré le nombre de connecteurs qu'elle contient.

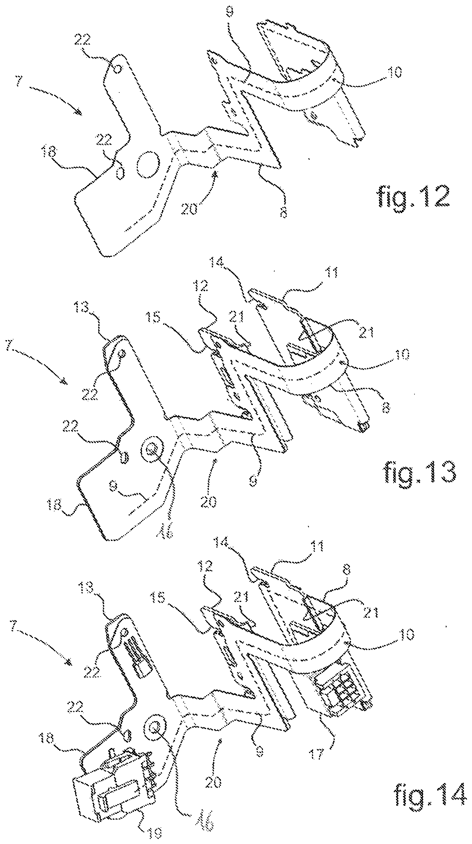

Sur les fig.2 à fig.11, les différentes positions PO1 ; PO2 ; PO3 de déformation de l'organe de raccordement électrique 6 sont représentées en fonction des positions correspondantes prises par le module optique 1 en débattement latéral. L'élément flexible 7 tel qu'illustré sur les figures 1 à 14, est un circuit imprimé souple (ou « flexboard » en anglais) comprenant un support en matériau souple, par exemple en polymère, dans lequel sont intégrés des conducteurs 9. L'intégration de ces conducteurs 9 est de préférence réalisée par dépôt laminé de cuivre pour former des pistes, qui sont protégées par un revêtement isolant. Par souci de clarté dans les figures 12 à 14, une seule piste est représentée, en pointillée. Sur la figure 1, on peut observer une pluralité de pistes représentées en pointillés. L'élément flexible 7 comporte une zone d'inflexion localisée 10, en étant repliée sur elle-même pour conférer à l'élément flexible sa flexibilité tout en gardant la surface médiane sensiblement parallèle à l'axe A, lorsque le module est actionné en rotation autour d'un axe de rotation R parallèle à l'axe A. Ce repli confère plus particulièrement à l'élément flexible 7 une conformation localisée en arceau dans la dite zone d'inflexion 10. L'élément flexible a ainsi des possibilités de positionnement unique pour chaque position du module optique.

Sur les fig.13 et fig.14, plusieurs platines 11, 12, 13 sont fixées sur l'élément flexible 7 pour conférer localement de la rigidité au circuit imprimé souple. Dans le mode de réalisation illustré, ces platines comprennent des moyens de solidarisation mécanique 14, 15, 16. Les moyens de solidarisation 15 d'une première platine 12 et les moyens de solidarisation 14 d'une deuxième platine 11 sont affectés à une fixation de l'élément flexible 7 respectivement sur le module optique 1 par l'intermédiaire de l'ossature 4 qu'il comprend et sur le support 5.

L'élément flexible 7 portent également des connecteurs 17, 19, un premier connecteur 19 assurant la connexion de l'élément flexible au module optique et un deuxième connecteur 17 solidaire au support 5 qui connecte l'élément flexible à l'alimentation électrique et à d'autre organes de commandes, fixés dans le boîtier du projecteur ou à l'extérieur de celui-ci.

Sur l'exemple de réalisation de l'organe de raccordement électrique illustré, l'élément flexible 7 est équipé de trois platines 11, 12, 13. Deux platines 11, 12 sont assemblées à l'élément flexible 7 de part et d'autre de la zone flexible 10 de l'élément flexible 7. Dans cette zone d'inflexion l'élément flexible a une forme de ruban. Cette forme n'est cependant pas limitative. Une telle position de ces platines 11, 12 permet de circonscrire rigoureusement la zone de déformation de l'élément flexible 7 dans la zone d'inflexion 10, située entre la première platine 12 et la deuxième platine 11.

La deuxième platine 11 est une platine d'extrémité de l'élément flexible 7, qui est porteuse d'un connecteur 17 apte à coopérer avec un connecteur complémentaire affecté à un ou plusieurs organes distants auxquels le module optique 1 doit être électriquement relié. Ces organes sont notamment l'alimentation électrique du projecteur et des signaux de commandes venant de l'extérieur du projecteur, et/ou encore d'autres organes pouvant être fixés sur le boîtier du projecteur, à l'intérieur ou à l'extérieur de celui-ci. La deuxième platine 11 est fixée au support 5. Lorgane de raccordement électrique 6 étant structurellement indépendant de ce conducteur complémentaire, ce dernier n'est donc pas affecté par les mouvements de l'ossature 4 et du générateur de lumière, mais seulement par ceux de support. Dans l'exemple illustré, l'ossature est soumise au débattement latéral du code virage, alors que le support n'est déplacé que pour la correction de la portée et du positionnement de référence du module optique. Le mouvement de correction est beaucoup moins ample et moins fréquent que le débattement du code virage. Par conséquent, le conducteur complémentaire est beaucoup moins sollicité que l'organe de raccordement électrique entre le support 5 et l'ossature 4. Il est donc possible d'utiliser une gaine de câble en guise de raccordement complémentaire. Cette variante de réalisation permet la séparation de la liaison électrique qui relie le module optique 1 à des organes distants, en un tronçon mobile constitué par l'élément flexible 7 et un tronçon peu mobile reliant le module optique avec ces organes distants.

Une troisième platine 13 est assemblée à l'élément flexible 7 à l'autre extrémité de l'élément flexible 7, qui s'étend au-delà s'étend au-delà de la première platine 12, pour former un prolongement 18 de l'élément flexible 7 vers les moyens d'activation de la source lumineuse, telle qu'une ou plusieurs LED ou encore une lampe à décharge 3, du module optique 1. Le prolongement peut également porter les moyens d'activation d'un organe moteur provoquant la mobilité du module optique 1.

L'extrémité terminale libre du prolongement 18 de l'élément flexible 7 porte un connecteur 19 apte à coopérer avec un connecteur complémentaire affecté au module optique 1, dans ce cas le connecteur du moteur d'entraînement d'un cache mobile pour conférer une coupure au faisceau lumineux émis. Selon la configuration du module optique 1 et des modalités d'implantation de l'organe de raccordement électrique entre l'ossature 4 et le support 5, l'élément flexible peut être aisément adapté par rapport à l'ossature et à l'encombrement disponible. La platine 13 permet donc de déporter le premier connecteur 19 mobile avec le module optique.

Les platines 11, 12, 13 sont en contact plan avec l'élément flexible 7, améliorant ainsi le guidage de la déformation de l'élément flexible 7. Il est à noter que bien que le mode de réalisation illustré comporte trois platines, ce nombre est donné à titre illustratif.

L'élément flexible 7 et les platines 11, 12, 13 comportent des moyens de positionnement 22 coopérant avec des tenons de l'ossature ou du support. L'élément flexible 7 et les platines comporte des orifices de passage superposés permettant le passage à leur travers de pions de centrage pour positionner l'ensemble sur l'ossature ou le support. La première platine 12 et la deuxième platine 11 intègrent lesdits moyens de solidarisation 15 et 14 qui sont, dans cet exemple, constitués par des organes d'encastrement 14, 15. Les moyens de solidarisation de la troisième platine sont moyens de vissage passant au travers d'orifices 16. Bien entendu ces moyens de solidarisation ne sont pas limitatifs.

Dans la zone de flexible 10 de l'élément flexible 7, et plus particulièrement de part et d'autre de cette zone de flexible 10, les conducteurs 9 sont soumis à des contraintes mécaniques dont il est souhaitable de les préserver. L'élément flexible 7 est équipé d'organes de protection mécanique 21 des conducteurs 9, qui sont ménagés aux extrémités de zone flexible 10 de l'élément flexible 7. Sur l'exemple de réalisation illustré, ces organes de protection 21 sont agencés un bord arrondi, obtenu par pliage des platines en direction du sens de rapprochement de chaque extrémité de la zone flexible 10. Ces bords arrondis 21 permettent d'éviter une usure par cisaillement de l'élément flexible contre le bord de la platine, lors des mouvements répétés de rotation du module optique, et d'augmenter ainsi davantage la durabilité du raccordement électrique.

L'organisation structurelle de l'organe de raccordement électrique 6 de l'invention est particulièrement adaptée pour son exploitation dans le cadre d'un module optique 1 qui est monté mobile sur le boîtier d'un dispositif d'éclairage et/ou de signalisation pour véhicule automobile, individuellement et/ou conjointement avec d'autres modules optiques 1. L'organe de raccordement électrique 6 est fiable et pérenne, y compris pour un module optique 1 soumis à des mouvements fréquents, répétés et/ou alternatif dans le cadre de l'exploitation de sa mobilité sur le boîtier. Cet organe de raccordement électrique 6 permet d'optimiser le nombre de flux électriques susceptibles d'être échangés entre les organes électriques embarqués sur le module optique 1, tels que la ou les sources lumineuse et ses moyens d'activation, et/ou au moins un organe moteur, et ceux disposés à distance de ce module optique 1, moyens électroniques notamment tels que des moyens de commande, et/ou une source d'énergie électrique du véhicule. L'organe de raccordement électrique 6 est d'une structure simple et est peu encombrant, malgré l'optimisation offerte du nombre de flux électriques pouvant être échangés entre le module optique 1 et les dits organes distants. L'organe de raccordement électrique 6 est facilement implantable à l'intérieur du boîtier, à partir des moyens de solidarisation 14,15,16.

De plus, dans une variante de réalisation en réalisant l'élément flexible au moyen d'un circuit imprimé souple, on peut également intégrer les composant électriques et électroniques directement au raccordement électrique. On peut donc avoir un seul élément réalisant le raccordement électrique et portant différents composants électroniques pilotant ou participant au pilotage du module optique. Outre une réalisation plus économique et plus simple, cela permet une réduction du poids. Cette invention est particulièrement intéressante dans le cadre d'un module optique réalisant une fonction code virage et/ou une fonction de correction dynamique, plus particulièrement dans le cadre de la fonction code virage.

## Revendications

1. Module optique (1) équipant un dispositif d'éclairage et/ou de signalisation pour véhicule automobile, comprenant un générateur de lumière comprenant au moins une source lumineuse associée à un système optique, ce module optique étant doté d'une structure (4) de montage montée mobile en rotation autour d'un axe de rotation (R) sur un support (5), de moyens de raccordement électrique avec au moins un organe distant, et équipé d'un organe de raccordement électrique comprenant un élément flexible (7) intégrant des conducteurs (9) électriques et muni de moyens de solidarisation mécanique (14,15,16) respectivement affectés à sa fixation sur la structure de montage (4) et sur au moins ledit support (5), **caractérisé en ce que** ledit élément flexible a une forme du type d'une nappe comprenant deux faces principales sensiblement parallèles et une surface médiane parallèle aux faces principales, et lesdits moyens de solidarisation mécanique permettent de maintenir ledit élément flexible (7) courbé au moins en partie, de manière à ce que la surface médiane dudit élément flexible soit dans la partie courbée parallèle à l'axe de rotation de ladite structure de montage (4) par rapport audit support (5).

2. Module optique selon la revendication 1, **caractérisé en ce que** ledit axe de rotation est sensiblement vertical lorsque l'axe optique du générateur de lumière est sensiblement horizontal.

3. Module optique (1) selon la revendication 1 ou 2, **caractérisé en ce que** ladite structure de montage (4) est mobile entre une première position extrême et une deuxième position extrême, et **en ce que** les éléments de fixations sont agencés de telle sorte et ladite nappe (7) présente une taille telle que ladite nappe (7) est recourbée en arceau.

4. Module optique selon l'une quelconque des revendications 1 à 3, **caractérisé en ce que** ledit élément flexible (7) est muni de platines (11, 12, 13) qui constituent des organes d'intégration à l'élément flexible (7) desdits moyens de solidarisation mécanique (14, 15, 16) de l'élément flexible (7).

5. Module optique selon l'une quelconque la revendication 4, **caractérisé en ce que** lesdites platines comprennent un bord où l'élément flexible rejoint la platine correspondante, ledit bord présentant une courbure (21) pour éviter un contact entre un bord saillant et ledit élément flexible (7) lors du mouvement de ladite structure de montage (4).

6. Module optique selon l'une quelconque des revendications précédentes, **caractérisé en ce que** ledit élément flexible est un câble plat.

7. Module optique selon l'une quelconque des revendications 1 à 5, **caractérisé en ce que** ledit élément flexible est un circuit imprimé souple.

8. Module optique selon la revendication 7, **caractérisé en ce que** les pistes conductrices de circuit imprimé souple sont réalisées par dépôt laminé d'un matériau conducteur sur au moins l'une de ses faces.

9. Module optique selon la revendication 7 ou 8, **caractérisé en ce que** l'élément flexible comprend également des composants électroniques.

10. Module optique selon l'une des revendications 6 à 9, **caractérisé en ce que** l'élément flexible (7) est recouvert d'un couche de matériau conducteur, de manière à limiter les émissions électromagnétique par le raccordement électrique.

11. Module optique selon l'une quelconque des revendications précédentes, **caractérisé en ce que** ledit élément flexible (7) permet le raccordement électrique entre d'une part des composants électroniques et/ou des dispositifs électriques fixés à ladite structure de montage (4) et d'autre part un module de commande fixé au dit support (5).

12. Module optique selon l'une quelconque des revendications précédentes, **caractérisé en ce que** le mouvement entre ladite structure de montage (4) et ledit support (5) est destiné à conférer une fonction DBL au dit module optique.

13. Dispositif d'éclairage et/ou de signalisation pour véhicule automobile comprenant au moins un module optique (1) selon l'une quelconque des revendications précédentes.

## Patentansprüche

1. Optisches Modul (1), mit dem eine Beleuchtungs- und/oder Signalisierungsvorrichtung für ein Kraftfahrzeug ausgestattet ist und das einen Lichterzeuger umfasst, der wenigstens eine Lichtquelle umfasst, die einem optischen System zugeordnet ist, wobei dieses optische Modul mit einer Montagestruktur (4), die um eine Drehachse (R) drehbeweglich auf einem Träger (5) gelagert ist, und elektrischen Anschlussmitteln zur Verbindung mit wenigstens einem entfernten Organ versehen ist, und mit einem elektrischen Anschlussorgan ausgestattet ist, das ein flexibles Element (7) umfasst, in das elektrische Leiter (9) integriert sind und das mit Mitteln zur festen mechanischen Verbindung (14, 15, 16) versehen ist, die für seine Befestigung an der Montagestruktur (4) bzw. an wenigstens dem Träger (5) vorgesehen sind, **dadurch gekennzeichnet, dass** das flexible Element eine Form von der Art einer Decke aufweist, die zwei im Wesentlichen parallele Hauptseiten und eine zu den Hauptseiten parallele Mittelfläche umfasst, und die Mittel zur festen mechanischen Verbindung es ermöglichen, das flexible Element (7) wenigstens teilweise gekrümmt zu halten, derart, dass die Mittelfläche des flexiblen Elements in dem gekrümmten Teil parallel zur Drehachse der Montagestruktur (4) in Bezug auf den Träger (5) ist.

2. Optisches Modul nach Anspruch 1, **dadurch gekennzeichnet, dass** die Drehachse im Wesentlichen vertikal ist, wenn die optische Achse des Lichterzeugers im Wesentlichen horizontal ist.

3. Optisches Modul (1) nach Anspruch 1 oder 2, **dadurch gekennzeichnet, dass** die Montagestruktur (4) zwischen einer ersten Endposition und einer zweiten Endposition beweglich ist, und dadurch, dass die Befestigungselemente so gestaltet sind und die Decke (7) eine solche Größe aufweist, dass die Decke (7) bügelförmig gekrümmt ist.

4. Optisches Modul nach einem der Ansprüche 1 bis 3, **dadurch gekennzeichnet, dass** das flexible Element (7) mit Platten (11, 12, 13) versehen ist, welche Organe zur Integration der Mittel zur festen mechanischen Verbindung (14, 15, 16) des flexiblen Elements (7) mit dem flexiblen Element (7) darstellen.

5. Optisches Modul nach einem der Anspruch 4, **dadurch gekennzeichnet, dass** die Platten einen Rand umfassen, wo sich das flexible Element an die entsprechende Platte anschließt, wobei der Rand eine Krümmung (21) aufweist, um einen Kontakt zwischen einem vorspringenden Rand und dem flexiblen Element (7) bei der Bewegung der Montagestruktur (4) zu vermeiden.

6. Optisches Modul nach einem der vorhergehenden Ansprüche, **dadurch gekennzeichnet, dass** das flexible Element ein Flachbandkabel ist.

7. Optisches Modul nach einem der Ansprüche 1 bis 5, **dadurch gekennzeichnet, dass** das flexible Element eine flexible Leiterplatte ist.

8. Optisches Modul nach Anspruch 7, **dadurch gekennzeichnet, dass** die Leiterbahnen der flexiblen Leiterplatte durch Aufwalzen eines leitfähigen Materials auf wenigstens eine ihrer Seiten hergestellt werden.

9. Optisches Modul nach Anspruch 7 oder 8, **dadurch gekennzeichnet, dass** das flexible Element auch elektronische Komponenten umfasst.

10. Optisches Modul nach einem der Ansprüche 6 bis 9, **dadurch gekennzeichnet, dass** das flexible Element (7) mit einer Schicht aus leitfähigem Material bedeckt ist, um die elektromagnetischen Emissionen durch den elektrischen Anschluss zu begrenzen.

11. Optisches Modul nach einem der vorhergehenden Ansprüche, **dadurch gekennzeichnet, dass** das flexible Element (7) den elektrischen Anschluss zwischen einerseits elektronischen Komponenten und/oder elektrischen Vorrichtungen, die an der Montagestruktur (4) befestigt sind, und andererseits einem Steuerungsmodul, das an dem Träger (5) befestigt ist, ermöglicht.

12. Optisches Modul nach einem der vorhergehenden Ansprüche, **dadurch gekennzeichnet, dass** die Bewegung zwischen der Montagestruktur (4) und dem Träger (5) dazu bestimmt ist, das optische Modul mit einer dynamischen Kurvenlichtfunktion (DBL) auszustatten.

13. Beleuchtungs- und/oder Signalisierungsvorrichtung für ein Kraftfahrzeug, welche wenigstens ein optisches Modul (1) nach einem der vorhergehenden Ansprüche umfasst.

## Claims

1. Optical module (1) equipping a lighting and/or signalling device for a motor vehicle, comprising a light generator comprising at least one light source associated with an optical system, this optical module being provided with a mounting structure (4) mounted on a support (5) so as to be rotatable about an axis of rotation (R), and with means for connecting electrically to at least one remote member, and equipped with an electrical connection member comprising a flexible element (7) that incorporates electrical conductors (9) and is provided with mechanical securing means (14, 15, 16) respectively intended for fastening it to the mounting structure (4) and to at least said support (5), **characterized in that** said flexible element has a form of the sheet type comprising two approximately parallel faces and a median surface parallel to the main faces, and said mechanical securing means make it possible to keep said flexible element (7) at least partially curved such that the median surface of said flexible element is, in the curved part, parallel to the axis of rotation of said mounting structure (4) with respect to said support (5).

2. Optical module according to Claim 1, **characterized in that** said axis of rotation is substantially vertical when the optical axis of the light generator is substantially horizontal.

3. Optical module (1) according to Claim 1 or 2, **characterized in that** said mounting structure (4) is movable between a first end position and a second end position, and **in that** the fastening elements are arranged in such a way and said sheet (7) has a size such that said sheet (7) is curved into an arch shape.

4. Optical module according to any one of Claims 1 to 3, **characterized in that** said flexible element (7) is provided with mounting plates (11, 12, 13) that form members for incorporating said mechanical securing means (14, 15, 16) of the flexible element (7) in the flexible element (7).

5. Optical module according to any one of Claim 4, **characterized in that** said mounting plate comprise an edge where the flexible element meets the corresponding mounting plate, said edge having a curvature (21) in order to avoid contact between a protruding edge and said flexible element (7) during the movement of said mounting structure (4).

6. Optical module according to any one of the preceding claims, **characterized in that** said flexible element is a flat cable.

7. Optical module according to any one of Claims 1 to 5, **characterized in that** said flexible element is a flexible printed circuit.

8. Optical module according to Claim 7, **characterized in that** the conductor tracks of the flexible printed circuit are produced by rolling a conductive material onto at least one of the faces thereof.

9. Optical module according to Claim 7 or 8, **characterized in that** the flexible element also comprises electronic components.

10. Optical module according to one of Claims 6 to 9, **characterized in that** the flexible element (7) is covered with a layer of conductive material, so as to limit the electromagnetic emissions by the electrical connection.

11. Optical module according to any one of the preceding claims, **characterized in that** said flexible element (7) allows the electrical connection between electronic components and/or electrical devices secured to said mounting structure (4), for the one part, and a control module secured to said support (5), for the other part.

12. Optical module according to any one of the preceding claims, **characterized in that** the movement between said mounting structure (4) and said support (5) is intended to confer a DBL function on said optical module.

13. Lighting and/or signalling device for a motor vehicle, comprising at least one optical module (1) according to any one of the preceding claims.
